# EUROPEAN PATENT APPLICATION

(11) **EP 4 654 415 A1**
(43) Date of publication of application: **26.11.2025**
(21) Application number: 24177335.7
(22) Date of filing: 22.05.2024
(51) Int. Cl.: H02J 3/00, C25B 15/02, H02J 13/00

(54) **METHOD OF FLICKER ASSESSMENT FOR AN ELECTROLYSIS SYSTEM**

(71) Applicant: Siemens Energy Global GmbH & Co. KG, 81739 München (DE)
(72) Inventor: Buratckii, Artem, 90459 Nürnberg (DE); Lukianov, Semen, 91058 Erlangen (DE); Calic, Nemanja, 91052 Erlangen (DE)

(57) **Abstract**

A method (100) of flicker assessment for an electrolysis system, wherein the electrolysis system is connected to an AC power grid via a point-of-connection, comprises operating the electrolysis system in a continuous operation mode (104) and in a switching operation mode (105) and measuring (106, 107), at the point-of-connection, voltage time-series values and current time-series values; determining (108, 109) simulated instantaneous voltage time-series values from a fictitious grid circuit that comprises an ideal phase-to-neutral voltage source, a fictitious grid impedance and a current sink representing the electrolysis system, wherein said measured voltage time-series values and current time-series values correspond to input currents and input voltages of the current sink; and applying (110, 111) said simulated instantaneous voltage time-series values to a flickermeter for determining at least corresponding short-term flicker emission values from each simulated instantaneous voltage time-series.

## Description

The present disclosure in general relates to voltage flicker, i.e., rapid voltage fluctuations, in a power grid providing electrical power to at least a connected electrolysis system. More particularly, the present disclosure relates to a method of flicker assessment for an electrolysis system. Further, the present disclosure relates to a computer program product and a computer-readable storage medium.

Electrolysis is a process used for producing hydrogen by using electricity to split water into hydrogen and oxygen. Green hydrogen production, i.e., the production of hydrogen using renewable energy, such as electrical energy generated using wind turbines or photovoltaic systems, is increasing due to efforts to de-carbonize energy production. Therefore, the number of installed electrolysis systems connected to transmission networks for electrical energy, e. g. alternating current (AC) power grids, continuously increases. Some electrolysis systems are connected to renewable energy sources via medium voltage links. However, in order to accelerate green hydrogen production, the electrolysis system capacity of planned electrolysis system projects will be in the Giga-Watt range, making them less suitable for medium voltage networks.

Considering this, requirements for the connection of such large electrolysis systems to existing high voltage transmission networks need to be defined. The connection of any high-power electrical consumer or generator system to existing electrical energy transmission networks requires compliance of the system with basic network requirements related to, e.g., power quality parameters, such as requirements regarding harmonic distortion, voltage unbalance, minimum power factor and voltage flicker.

Procedures of how to measure, calculate and evaluate harmonic distortion, voltage unbalance and power factor applicable to all types of installed systems are available and can also be applied to electrolysis systems. However, flicker assessment is usually carried out according to IEC 61000-4-15 standard of the International Electrotechnical Commission (IEC), which is a general standard typically used for the determination of short-term flicker severity *P*ₛₜ (unless otherwise specified, short-term evaluation time interval *T*ₛₕₒᵣₜ is 10 minutes) and long-term flicker severity *P*ₗₜ, (unless otherwise specified, long-term time interval *T*_{long} is 12 x 10 minutes, i.e., 2 hours) which could be directly used for flicker evaluation at the point of common coupling (PCC) or the point of connection (PoC) of an electrolysis system. The metering equipment required for flicker evaluation of a whole electrolysis plant consisting of multiple electrolysis systems is installed at the PCC.

PCC and PoC can be the same, but in most network topologies are not the same and can also be located on different voltage levels. The PoC of an electrolysis system is its connection point through which it receives electrical energy from a connected power supply, which could be any electrical energy supplying transmission link or microgrid probably connecting multiple electrical load systems on distribution network level, e.g., multiple electrolysis systems belonging to a large-scale electrolysis plant, and generator systems, while the PCC connects such transmission links or microgrids to a high voltage AC power grid, i.e., an AC transmission power grid. However, alternatively, an electrolysis system may connect to the high voltage AC power grid directly via a PCC instead, i.e., the PoC of the electrolysis system can be identical to the PCC.

However, even though the IEC 61000-4-15 standard could be directly used for flicker assessment, and particularly a flickermeter according to IEC 61000-4-15 standard could directly be used for flicker measurement, several limitations apply.

For example, for flicker assessment according to IEC 61000-4-15 standard of an electrolysis plant consisting of multiple electrolysis systems (i.e., multiple electrolysis arrays), at the PCC, actual voltage measurements at the PCC are required during operation of the whole plant. It is not possible to distinguish the contributions of each source, i.e., of each individual electrolysis system, to the overall flicker. Therefore, if any expansion of or construction work on the plant is planned, it is not possible to accurately estimate flicker at the PCC before the new installation, i.e., a new or repaired electrolysis system, is connected and operating. Such an approach contradicts transmission system operator's (TSO) requirement that flicker assessment and evaluation should be carried out before any new connection is enabled.

As a different approach, flickermeters according to the IEC 61000-4-15 standard could be used for flicker measurements at the PoCs of each of the electrolysis systems of an electrolysis plant. Although all these flicker sources have their own PoC, they may all connect to a common PCC, and it would be impossible or at least very complicated to recalculate short-term and long-term flicker severity *P*ₛₜ ad *P*ₗₜ for all the electrolysis systems according to IEC 61000-4-15 standard and then refer them to a single PCC.

In order to enable flicker evaluation of large scale electrolysis plants at the PCC without the limitations of directly applying the IEC 61000-4-15 standard in a way that allows for updates, if the topology of the electrolysis plant changes, e. g., an additional electrolysis system is connected to the electrolysis plant, parameter values characterizing flicker at the PoC of each electrolysis system are required which are independent of the circumstances of the determination of the parameter values, such as which other electrolysis systems or other consumers or generators of electrical energy were present during voltage measurements used for determination of the flicker parameter values.

It is therefore an objective of the present invention to provide a possibility for determining parameter values characterizing flicker at a PoC of an electrolysis system independently of the network the electrolysis system is connected to.

This objective is solved by a method of flicker assessment for an electrolysis system as stated in claim 1, a computer program product as stated in claim 13 and a computer-readable storage medium as stated in claim 14. Advantageous additional embodiments of the invention are disclosed in the respective dependent claims.

According to a first aspect of the invention, a method of flicker assessment for an electrolysis system is provided, wherein the electrolysis system is connected to an AC power grid via a point-of-connection. The method comprises operating the electrolysis system in a continuous operation mode and in a switching operation mode and measuring, at the point-of-connection, voltage time-series values *u*ₘ(*t*) and current time-series values *i*ₘ(*t*). The method further comprises determining simulated instantaneous voltage time-series values *u*_{fic}(*t*) (i.e. simulated voltage fluctuations) from a fictitious grid circuit that comprises an ideal phase-to-neutral voltage source, a fictitious grid impedance and a current sink representing the electrolysis system, wherein the measured voltage time-series values *u*ₘ(*t*) and current time-series values *i*ₘ(*t*) correspond to input currents and input voltages of the current sink, and applying the simulated instantaneous voltage time-series values to a flickermeter for determining at least corresponding short-term flicker emission values *P*_{st,fic} from each simulated instantaneous voltage time-series *u*_{fic}(*t*).

Measured voltage time-series values *u*ₘ(*t*) and current time-series values *i*ₘ(*t*) are series of voltage and current samples measured over a same period of time at the point-of-connection.

During continuous operation mode of the electrolysis system, the electrolyser rows of the electrolysis system continuously carry out the electrolysis process and produce hydrogen, wherein the hydrogen production rate remains constant at a level depending on a level of active DC power applied to the electrolyser rows. In particular, such a continuous operation of the electrolysis system is not possible at a low active power level due to electrolysis process limitations and the specific polarization curve which depends on the type of electrolysis cells used in the electrolysis rows of the electrolysis system. In other words, any lower threshold for the applied active DC power depends on the type of employed electrolysis cells (e.g., Proton Exchange Membrane (PEM), alkaline etc.).

During switching operation mode, the electrolysis system is not producing hydrogen at a constant rate, but is in a transition phase, e. g., during phases of energization and de-energization of the rectifier transformer, which is a part of the AC/DC conversion system that provides DC current required by the electrolyser rows by converting AC power provided by the AC power grid via the point-of-connection. Energization and de-energization can be triggered, e.g., by closing and opening a circuit breaker switch that connects the electrolysis system with the AC power grid.

The described method of flicker assessment for an electrolysis system is an (at least partly) computer-implemented method carried out on a computer or other processing apparatus comprising a processor and a memory and an interface for receiving measured values and parameter settings. In a simulation carried out on the computer, a fictitious grid circuit as a simulated equivalent circuit comprises a (fictitious) current sink that represents the electrolysis system, and wherein the AC power grid is described by a fictitious grid impedance, which may be represented by a grid resistance in series with a grid inductance and an ideal phase-to-neutral voltage source and wherein the fictitious grid impedance is selected such that the fictitious grid provides a suitable short-circuit apparent power *S*_{k,fic}. Applying the measured voltage time-series values *u*ₘ(*t*) and current time-series values *i*ₘ(*t*) as the voltage and current values received by the current sink allows determining corresponding simulated instantaneous voltage time-series values *u*_{fic}(*t*). This simulation model-based approach is similar to the simulation model-based approach described in IEC 61400-21-1 standard that describes flicker assessment for wind turbines connected to power grids via inverters connected to the PCC. The standard is also applicable to photovoltaic systems. Further, in line with IEC 61400-21-1 standard, in a preferred embodiment, the fictitious grid circuit is chosen such that an impedance phase angle ψₖ of the fictitious grid circuit equals 30, 50, 70 or 85 degrees, i.e., the parameters of the fictitious grid circuit are selected such that network impedance phase angles ψₖ = 30°, 50°, 70° and 85° apply, and simulated instantaneous voltage time-series values *u*_{fic}(*t*) are determined for each of the selected impedance phase angles. The simulated instantaneous voltage time-series values are then applied to a flickermeter, e.g. a flickermeter as described in and in compliance with IEC 61000-4-15 standard, for determining at least corresponding short-term flicker emission values *P*_{st,fic} from each of the simulated instantaneous voltage time-series *u*_{fic}(*t*). In a preferred embodiment, the flickermeter is a simulated flickermeter, i.e., the computer or other processing apparatus carries out a voltage flicker algorithm which configures the computer to perform the functionalities of a flickermeter according to IEC 61000-4-15 standard. The short-term flicker emission values *P*_{st,fic} can be determined as the short-term flicker severity *P*_{st,fic} as defined in IEC 61000-4-15 standard.

The described method allows to determine *P*_{st,fic} values for different active power values at the electrolysis system in continuous operation mode as well as in switching operation mode, wherein the determined short-term flicker emission values *P*_{st,fic} merely depend on the conditions of the actual AC power grid connected to the electrolysis system for obtaining measurement values through a chosen short-circuit apparent power value, and the determined short-term flicker emission values *P*_{st,fic} are applicable for the description of flicker at the electrolysis system for any comparable short-circuit apparent power value.

In an embodiment of the method, in the continuous operation mode, the electrolysis system is operated while varying (increasing and/decreasing) an active power consumption of the electrolysis system within an active power range between a minimum active power level and a maximum active power level and the voltage time-series values *u*ₘ(*t*) and current time-series values *i*ₘ(*t*) (used for determining the simulated instantaneous voltage time-series values *u*_{fic}(*t*)) are measured during defined equal short-term time periods for consecutive active power operation intervals of the active power range, wherein the minimum active power level corresponds to a minimum continuous operation point of the electrolysis system.

The maximum active power level refers to the electrical power consumption of the electrolysis system operating at maximum hydrogen generation rate. The active power level may be expressed as a percentage of the maximum active power level, which corresponds to 100%. The minimum active power level is defined as the minimum level at which continuous operation of the electrolysis system allows for hydrogen production at a constant rate. The minimum active power level is dependent on the type of electrolysis cells used in the electrolyser rows of the electrolysis system. For example, the minimum active power level may be 400 of the maximum active power level. The active power range is then divided into consecutive active power operation intervals, i.e., active power bins, e.g., each covering 10%-intervals between the minimum and the maximum active power levels and the electrolysis system is operated for defined equal short-term time periods within each of the active power operation intervals. The defined equal short-term time period may, for example, be selected, in line with the short-term time period used in IEC 61400-21-1 standard, as 10 minutes. In other words, during continuous operation mode voltage and current time-series values *u*ₘ(*t*), *i*ₘ(*t*) are measured (and simulated instantaneous voltage time-series values *u*_{fic}(*t*) are determined) in line with the continuous operation mode described for IEC 61400-21-1 standard, but with a non-zero lower limit applied to the active power bins that defines entry of the electrolysis system into continuous operation mode (instead of a power range having a minimum active power level of 0% as applicable to, e.g., wind turbines) .

In a preferred example embodiment, the method further comprises, when the electrolysis system is operated in the continuous operation mode, normalizing the short-term flicker emission values *P*_{st,fic}, i.e., the short-term flicker severity, from each simulated instantaneous voltage time-series to corresponding flicker coefficients *c*(ψₖ). These flicker coefficients *c*(ψₖ) are independent of selected short-circuit apparent power *S*_{k,fic} and characterize short-term flicker of the electrolysis system independently of the actual condition of the grid the electrolysis system is currently connected to. The short-term flicker coefficient is determined as the short-term flicker emission values *P*_{st,fic} multiplied with the ratio of a nominal apparent power of the electrolysis system and the short-circuit apparent power of the fictitious grid.

In an example embodiment, the method further comprises, when the electrolysis system is operated in the continuous operation mode, sorting, i.e., classifying, the flicker coefficients *c*(ψₖ) into active power bins corresponding to the active power intervals, determining a flicker coefficient distribution function for each active power interval, and calculating a percentile value of each flicker coefficient distribution function as a single coefficient representation for each active power bin. In an example embodiment, the percentile value is a 95% percentile value.

In an embodiment of the method, in the switching operation mode, the electrolysis system is operated during specified switching events of the electrolysis system and the voltage time-series values *u*ₘ(*t*) and current time-series values *i*ₘ(*t*) are measured for said specified switching events. A switching event corresponds to a certain transition phase during which the electrolysis system transitions into or leaves the continuous operation mode, e.g., during start up and shut down of the electrolysis system. In the switching operation mode, the voltage and current time-series values *u*ₘ(*t*), *i*ₘ(*t*) are not determined for defined equal short-term time periods, e.g., 10 minutes, but for the duration of the particular switching event, or selected shorter periods of the actual switching event during which the highest flicker is expected.

In a preferred example embodiment, the method further comprises, when the electrolysis system is operated in the switching operation mode, calculating minimum and maximum Root-Mean-Square values *U*_{fic,min}, *U*_{fic,max} for each simulated instantaneous voltage time-series *u*_{fic}(*t*) normalizing the short-term flicker emission values *P*_{st,fic} from each simulated instantaneous voltage time-series to corresponding flicker step factors *k*ₚ(ψₖ) and normalizing the differences between the maximum and minimum Root-Mean-Square values *U*_{fic,max}-*U*_{fic,min} for each simulated instantaneous voltage time-series to corresponding voltage change factors *k*ᵤ(ψₖ). Similar to the normalization step performed for the short-term flicker emission values in continuous operation mode, flicker step factors *k*ₚ(ψₖ) and voltage change factors *k*ᵤ(ψₖ) are determined for characterizing flicker of the electrolysis system in the switching operation mode independently of the actual condition of the grid the electrolysis system is currently connected to. Flicker step factors *k*ₚ(ψₖ) and voltage change factors *k*ᵤ(ψₖ) are calculated in line with the definition of these parameters given in IEC 61400-21-1 standard.

In an example embodiment, the method further comprises, when the electrolysis system is operated in the switching operation mode, for identical impedance phase angles ψₖ of the fictitious grid circuit, averaging the flicker step factors *k*ₚ(ψₖ) and averaging the voltage change factors *k*ᵤ(ψₖ). This allows to provide averaged single values for flicker step factors *k*ₚ(ψₖ) and voltage change factors *k*ᵤ(ψₖ) descriptive for flicker of the electrolysis system during switching operation mode. In an embodiment, in line with IEC 61400-21-1 standard, a maximum number (N₁₀ₘ) of switching operations within a 10-minute period and a maximum number (N₁₂₀ₘ) of switching operations within a 2-hour period can be defined, e.g., by the manufacturer, and can be reported to a user together with the determined flicker step factors *k*ₚ(ψₖ) and voltage change factors *k*ᵤ(ψₖ).

In an embodiment of the method, the specified switching events comprise energization phases and/or de-energization phases (i.e., one or more of energization phases and de-energization phases) of a transformer unit, particularly the rectifier transformers, of the electrolysis system. Energization and de-energization of the transformer unit takes place, e.g., after connection and disconnection, respectively, of the electrolysis system to and from the AC power grid, i.e., to and from power supply.

In another embodiment of the method, the specified switching events comprise phases of switching-off and/or switching-on one or more selected electrolyser rows of parallel electrolyser rows connected to a common transformer unit, i.e., common rectifier transformer, of the electrolysis system. This applies, if the electrolysis system allows for separately switching on and off one or more of the electrolyser rows in case of, for example, a 24-pulse or 12-pulse configuration of the AC/DC converter system of the electrolysis system, thereby forming a new pulse configuration, e.g., changing from a 24-pulse configuration to either 18-pulse or 12-pulse or 6-pulse configuration by switching off, i.e., deactivating, selected electrolyser rows (or reversing the applied changes by switching on deactivated electrolyser rows).

And in another embodiment, the specified switching events comprise phases of power ramp-up from a minimum continuous operation power to a nominal operation power and/or ramp-down from the nominal operation power to the minimum continuous operation power. For example, if the transformer unit of the electrolysis system comprises an adjustable transformer with a tap changer connected between the PoC and the rectifier transformer, a ramp up or ramp down operation may cause the tap changer to automatically switch to the next higher or next lower position, thereby causing additional voltage peaks, i.e., flicker.

In an embodiment of the method, the (hardware or software) flickermeter applies a voltage flicker algorithm in compliance with IEC 61000-4-15 standard.

The described method and its embodiments are in line with several requirements specified by IEC 61400-21-1 standard, applied to electrolysis systems instead of wind turbines. The method enables calculation of flicker coefficients for electrolysis systems and generation of a description of large-scale electrolysis plants, e.g., by aggregation of independently determined flicker coefficients. Further, it enables flicker evaluation for more complex hybrid systems including wind turbines and/or photovoltaic plants in addition to the electrolysis system, as comparable flicker descriptions are determined, based on principles described by the same IEC 61400-21-1 standard.

Also, the method allows to perform flicker assessment before the electrolysis system is connected to the network and energized, and obtain permission from TSO for further connecting the electrolysis system to the network.

The method is applicable to any type of electrolysis system, e.g., with 24-pulse electrolyser configuration but also to 6-, 12-, and 18-pulse or any other configurations.

According to a second aspect of the invention, a computer program product comprises code portions that, when executed on a programmable apparatus, enable the programmable apparatus to carry out steps of a method according to the first aspect of the invention. And according to a third aspect of the invention, a computer readable storage medium comprises a computer program product according to the second aspect of the invention.

The programmable apparatus may be a computer or other processing device comprising a processor and a memory and an interface for receiving measured values, such as *u*ₘ(*t*), *i*ₘ(*t*), and parameter settings. The computer program product corresponds to a computer program, at least including software code portions for performing steps of the method according to the invention when run on a programmable apparatus, for enabling the programmable apparatus to perform functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of a method of flicker assessment for an electrolysis system according to an embodiment of the invention;
- Fig. 2: schematically illustrates examples of connections of an electrolysis system to an AC power grid;
- Fig. 3: schematically illustrates an example of an electrolysis system; and
- Fig. 4: schematically shows a diagram illustrating an electrolyser polarisation curve.

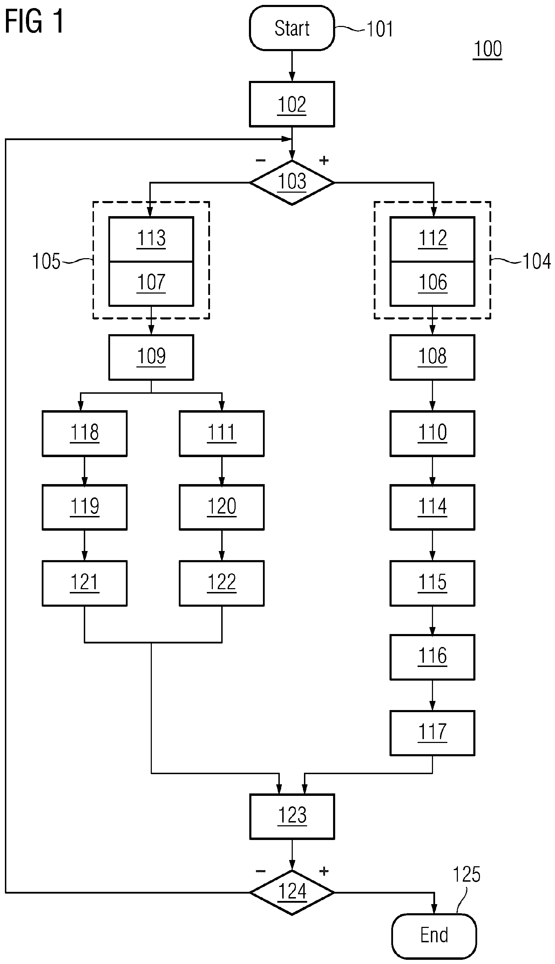

In Fig. 1, an example of a method of flicker assessment for an electrolysis system according to an embodiment of the invention is schematically illustrated. The method 100 begins in a start state 101, wherein, e.g., the electrolysis system is connected to an AC power grid via a point-of-connection (which may, but does not have to be the point-of-common-coupling), either in a real situation where the electrolysis system is actually intended to be operated or in an artificial situation where the electrolysis system is operated in a test environment. Further, in an embodiment the electrolysis system itself may be available as a computer simulation in a simulation environment, taking into account the characteristic curves and parameters of the planned electrolysis system hardware. Further, a computer or other programmable apparatus is configured, e.g., by loading code portions of a computer program product from a memory into a processor of the computer, for executing steps of the method. If the electrolysis system itself is not a computer simulation of a planned electrolysis system but a real (test) system, e.g., in a test environment, the computer may be further configured to receive voltage and current sensor signals from a sensor device connected to the point-of-connection. The point of connection of the electrolysis system is its connection point through which it receives electrical energy from a connected AC power grid. If the electrolysis system is operated in the test environment, the AC power grid of the test environment may be any AC power supply.

In the shown embodiment, a separate step is dedicated to loading 102 a test schedule defining how the electrolysis system is going to be tested taking into account, e.g., hardware parameters of the electrolysis system, e.g., parameters of the polarisation curve of the electrolysis cells of the electrolysis system.

In a subsequent step of determining 103, if the electrolysis system should be operated in a continuous operation mode or in a switching operation mode.

If the electrolysis system should be operated in a continuous operation mode (in Fig. 1 indicated as "+"), the electrolysis system is operated in the continuous mode 104. Otherwise (in Fig. 1 indicated as "-"), the electrolysis system is operated in the switching operation mode 105. In both operation modes, the operation includes a step of measuring 106, 107, at the point-of-connection, voltage time-series values *u*ₘ(*t*) and current time-series values *i*ₘ(*t*).

In the continuous operation mode, operating 104 the electrolysis system comprises varying 112 an active power consumption of the electrolysis system within an active power range between a minimum active power level and a maximum active power level, and the voltage time-series values *u*ₘ(*t*) and current time-series values *i*ₘ(*t*) are measured 106 during defined equal short-term time periods for consecutive active power operation intervals of the active power range, wherein the minimum active power level corresponds to a minimum continuous operation point of the electrolysis system. It is the minimum threshold for continuous provision of hydrogen at a constant rate. The step of varying 112 the active power consumption and the step 106 of measuring voltage time-series values *u*ₘ(*t*) and current time-series values *i*ₘ(*t*) are illustrated as a common block to illustrate that multiple variations can be applied and that the measurement is a process that is continuously carried out and the steps are carried out in a loop as often as necessary.

In the switching operation mode, operating 105 the electrolysis system comprises applying 113 specified switching events to the electrolysis system and operating the electrolysis system during the specified switching events, and the voltage time-series values uₘ(t) and current time-series values *i*ₘ(*t*) are measured 107 for the specified switching events. Therefore, the measurement duration can, but does not need to be equal to the defined equal short-term time periods used for measurement in the continuous operation mode. The specified switching events for operation of the electrolysis system include energization phases (i.e., time periods) and de-energization phases of a transformer unit of the electrolysis system, phases of switching-off and switching-on one or more selected electrolyser rows of parallel electrolyser rows connected to a common transformer unit of the electrolysis system and phases of power ramp-up from a minimum continuous operation power to a nominal operation power and ramp-down from the nominal operation power to the minimum continuous operation power. The step of applying 113 specified switching events to the electrolysis system and operating the electrolysis system during the specified switching events and the step 107 of measuring voltage time-series values *u*ₘ(*t*) and current time-series values *i*ₘ(*t*) are illustrated as a common block to illustrate that multiple switching events can be applied one after the other and that the measurement is a process that is continuously carried out and the steps are carried out in a loop as often as necessary. (However, some switching events may only be followed by changing the operation mode into the continuous operation mode).

In both operation modes, a next step of determining 108, 109 simulated instantaneous voltage time-series values *u*_{fic}(*t*) as output voltages of an ideal phase-to-neutral voltage source of a fictitious grid circuit that comprises the ideal phase-to-neutral voltage source, a fictitious grid impedance and a current sink representing the electrolysis system is carried out, wherein the measured voltage time-series values *u*ₘ(*t*) and current time-series values *i*ₘ(*t*) correspond to input currents and input voltages of the current sink. The fictitious grid circuit is chosen such that an impedance phase angle ψₖ of the fictitious grid circuit equals 30, 50, 70 or 85 degrees. For determining complete sets of coefficients, the step determining 108, 109 simulated instantaneous voltage time-series values *u*_{fic}(*t*) is carried out for all chosen impedance phase angles ψₖ.

Further, in both operation modes, the step of determining 108, 109 simulated instantaneous voltage time-series values *u*_{fic}(*t*) is followed by a step of applying 110, 111 the simulated instantaneous voltage time-series values *u*_{fic}(*t*) to a flickermeter for determining at least corresponding short-term flicker emission values *P*_{st,fic} from each simulated instantaneous voltage time-series. In the shown embodiment, a flickermeter as described in IEC 61000-4-15 standard is used. Preferably, the flickermeter is provided as part of the computer program product and applies a voltage flicker algorithm in compliance with IEC 61000-4-15 standard.

When the electrolysis system is operated in the continuous operation mode, the determined short-term flicker emission values *P*_{st,fic} from each simulated instantaneous voltage time-series are normalized 114 to corresponding flicker coefficients *c*(ψₖ), which are calculated by multiplication of *P*_{st,fic} with the ratio of a nominal apparent power of the electrolysis system and the short-circuit apparent power *S*_{k,fic} of the fictitious grid circuit selected when defining the fictitious grid circuit and thereby become independent of the fictious grid circuit and the actual network or test environment where measurements of uₘ(t) and iₘ(t) were performed.

When the electrolysis system is operated in the continuous operation mode, the step of normalizing 114 the determined short-term flicker emission values *P*_{st,fic} from each simulated instantaneous voltage time-series to corresponding flicker coefficients *c*(ψₖ), is followed by a step of sorting 115 (i.e., classifying) the flicker coefficients into active power bins corresponding to the active power intervals, which are then used for determining 116 a flicker coefficient distribution function for each active power interval, and calculating 117 a percentile value, e.g., a 95%-percentile value, of each flicker coefficient distribution function as a single coefficient representation for each active power bin.

When the electrolysis system is operated in the switching operation mode, the step of determining 109 simulated instantaneous voltage time-series values *u*_{fic}(*t*) is not only followed by the step of applying 111 the simulated instantaneous voltage time-series values *u*_{fic}(*t*) to a flickermeter for determining at least corresponding short-term flicker emission values *P*_{st,fic}, but, in line with IEC 61400-21-1 standard, the simulated instantaneous voltage time-series values *u*_{fic}(*t*) are also used for calculating 118 minimum and maximum Root-Mean-Square values *U*_{fic,min}, *U*_{fic,max} for each simulated instantaneous voltage time-series, followed by a step of normalizing 119 the differences between the maximum and minimum Root-Mean-Square values *U*_{fic,max}-*U*_{fic,min} for each simulated instantaneous voltage time-series to corresponding voltage change factors *k*ᵤ(ψₖ), and the short-term flicker emission values *P*_{st,fic} from each simulated instantaneous voltage time-series are normalized 120 to corresponding flicker step factors *k*ₚ(ψₖ)

When the electrolysis system is operated in the switching operation mode, as final calculation steps, for identical impedance phase angles ψₖ of the fictitious grid circuit, an averaging 122 of the flicker step factors *k*ₚ(ψₖ) and an averaging 121 of the voltage change factors *k*ᵤ(ψₖ) is performed.

After averaged flicker step factors and voltage change factors have been determined as characteristic values for the electrolysis system in switching operation mode and percentile values of each flicker coefficient distribution function have been determined for the electrolysis system in continuous operation mode, in a step of reporting 123 characteristic flicker values for the electrolysis system, flicker assessment results are output for further processing.

In the shown embodiment, it is further determined 124, if the test schedule loaded in step 102 has been completed. If this is true (in Fig. 1 indicated as "+"), the method ends 125. Otherwise (in Fig. 1 indicated as "-"), the method continues with step 103.

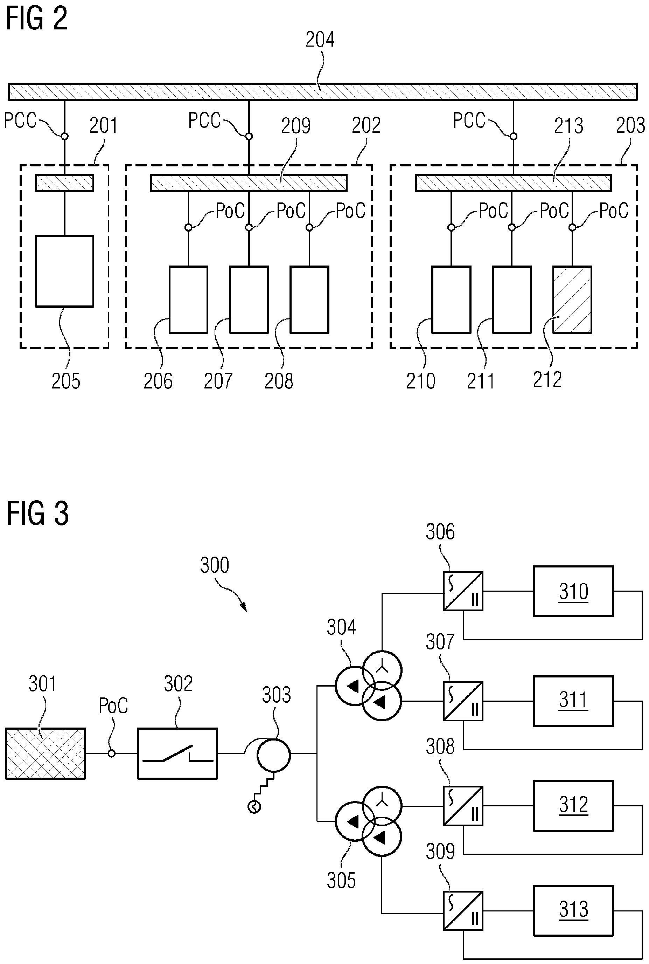

In Fig. 2, examples of connections of an electrolysis system to an AC power grid are schematically illustrated. As shown, a first, a second and a third local electric power systems 201, 202, 203 are each connected to an AC power grid 204 as an area electric power system via a Point-of-Common-Coupling (PCC). The first electric power system 201 comprises a single electrolysis system (i.e., a single electrolyser array) 205. The second electric power system 202 consists of three electrolysis systems 206, 207, 208, each connected to a local AC grid 209 or microgrid via their Point-of-Connection (PoC), wherein the local AC grid 209 is connected to the AC power grid 204 via a PCC. The three electrolysis systems 206, 207, 208 together form an electrolysis plant. The third electric power system 203 is a hybrid system that contains an electrolysis system 210, another load system (i.e., no electrolysis system) 211 and an energy resource system 212, i.e., a generator system, such as a wind turbine or a photovoltaic system, each connected to a local AC grid 213, which is connected to the AC power grid 204 as the area electric power system via a PCC.

In Fig.3, an example of an electrolysis system is schematically illustrated. A sensor device (not shown) for obtaining current and voltage measurement signals during flicker assessment may be connected to the PoC that connects the electrolysis system 300 to an AC grid 301. The electrolysis system comprises a circuit breaker switch 302 for connecting and disconnecting the electrolysis system from the AC grid 301. The shown electrolysis system 300 is a 24-pulse electrolysis system and contains an autotransformer 303 with an on-load tap changer, which may be subject to voltage flicker, e.g., during ramp-up or ramp down switching events. Each time the tap changer changes its position to enable a higher or lower voltage level, unwanted voltage peaks may be generated. The autotransformer secondary side is connected to primary sides of two rectifier transformers 304, 305, having their secondary sides connected to the AC input sides of four 6-pulse thyristor rectifier circuits 306, 307, 308, 309, which connect with their DC output sides to four electrolyser rows 310, 311, 312, 313, i.e., four parallel rows of electrolyser cell modules.

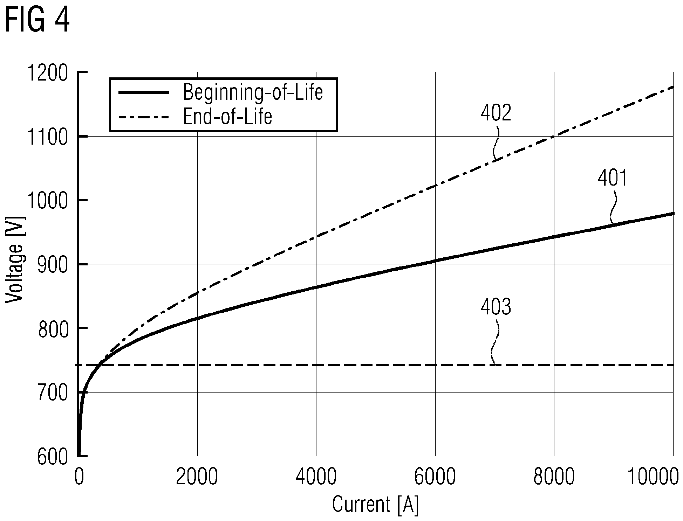

In Fig. 4, a diagram illustrating an electrolyser polarisation curve is schematically shown. A first polarisation curve 401 shows the polarisation curve of an example electrolyser row for a new electrolyser row, i.e., at its beginning of life. A second polarisation curve 402 shows the polarisation curve of the same example electrolyser row at the end of its life. At any time during the lifetime of the electrolyser row, a lower limit or minimum threshold for hydrogen production 403 applies, i.e., for example during flicker assessment, sample current and voltage measurements for an electrolysis system with the electrolyser row can only be evaluated in a continuous operation mode, if the operation point of the electrolysis system is set to or above the threshold 403.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to a certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, A method 100 of flicker assessment for an electrolysis system is provided, wherein the electrolysis system is connected to an AC power grid via a point-of-connection. The method comprises operating the electrolysis system in a continuous operation mode 104 and in a switching operation mode 105 and measuring 106, 107, at the point-of-connection, voltage time-series values and current time-series values; determining 108, 109 simulated instantaneous voltage time-series values from a fictitious grid circuit that comprises an ideal phase-to-neutral voltage source, a fictitious grid impedance and a current sink representing the electrolysis system, wherein said measured voltage time-series values and current time-series values correspond to input currents and input voltages of the current sink; and applying 110, 111 said simulated instantaneous voltage time-series values to a flickermeter for determining at least corresponding short-term flicker emission values from each simulated instantaneous voltage time-series.

Further, a computer program product and a computer readable storage medium are provided.

## Claims

1. Method (100) of flicker assessment for an electrolysis system,
wherein the electrolysis system is connected to an AC power grid via a point-of-connection, the method comprising
operating the electrolysis system in a continuous operation mode (104) and in a switching operation mode (105) and measuring (106, 107), at the point-of-connection, voltage time-series values and current time-series values;
determining (108, 109) simulated instantaneous voltage time-series values from a fictitious grid circuit that comprises an ideal phase-to-neutral voltage source, a fictitious grid impedance and a current sink representing the electrolysis system, wherein said measured voltage time-series values and current time-series values correspond to input currents and input voltages of the current sink; and
applying (110, 111) said simulated instantaneous voltage time-series values to a flickermeter for determining at least corresponding short-term flicker emission values from each simulated instantaneous voltage time-series.

2. The method as claimed in claim 1, wherein in the continuous operation mode, the electrolysis system is operated (104) while varying (112) an active power consumption of the electrolysis system within an active power range between a minimum active power level and a maximum active power level, and the voltage time-series values and current time-series values are measured (106) during defined equal short-term time periods for consecutive active power operation intervals of the active power range, wherein said minimum active power level corresponds to a minimum continuous operation point of the electrolysis system.

3. The method as claimed in claim 2, further comprising when the electrolysis system is operated (104) in the continuous operation mode,
normalizing (114) the short-term flicker emission values pst,fic from each simulated instantaneous voltage time-series to corresponding flicker coefficients.

4. The method as claimed in claim 3, further comprising when the electrolysis system is operated (104) in the continuous operation mode,
sorting (115) the flicker coefficients into active power bins corresponding to the active power intervals,
determining (116) a flicker coefficient distribution function for each active power interval, and
calculating (117) a percentile value of each flicker coefficient distribution function as a single coefficient representation for each active power bin.

5. The method as claimed in any of the preceding claims, wherein in the switching operation mode, the electrolysis system is operated (105) during specified switching events of the electrolysis system and the voltage time-series values and current time-series values are measured (107) for said specified switching events.

6. The method as claimed in claim 5, further comprising when the electrolysis system is operated (105) in the switching operation mode,
calculating (118) minimum and maximum Root-Mean-Square values for each simulated instantaneous voltage time-series,
normalizing (120) the short-term flicker emission values from each simulated instantaneous voltage time-series to corresponding flicker step factors and
normalizing (119) the differences between the maximum and minimum Root-Mean-Square values for each simulated instantaneous voltage time-series to corresponding voltage change factors.

7. The method as claimed in claim 6, further comprising when the electrolysis system is operated (105) in the switching operation mode,
for identical impedance phase angles of the fictitious grid circuit, averaging (122) the flicker step factors and averaging (121) the voltage change factors.

8. The method as claimed in any of claims 5 to 7, wherein the specified switching events comprise energization phases and/or de-energization phases of a transformer unit of the electrolysis system.

9. The method as claimed in any of claims 5 to 8, wherein the specified switching events comprise phases of switching-off and/or switching-on one or more selected electrolyser rows of parallel electrolyser rows connected to a common transformer unit of the electrolysis system.

10. The method as claimed in any of claims 5 to 9, wherein the specified switching events comprise phases of power ramp-up from a minimum continuous operation power to a nominal operation power and/or ramp-down from the nominal operation power to the minimum continuous operation power.

11. The method as claimed in any of the preceding claims, wherein the flickermeter applies a voltage flicker algorithm in compliance with IEC 61000-4-15 standard.

12. The method as claimed in any of the preceding claims, wherein the fictitious grid circuit is chosen such that an impedance phase angle of the fictitious grid circuit equals 30, 50, 70 or 85 degrees.

13. Computer program product, comprising code portions that, when executed on a programmable apparatus, enable the programmable apparatus to carry out steps of a method (100) according to any of the claims 1 to 12.

14. Computer readable storage medium, comprising a computer program product according to claim 13.
